# EUROPEAN PATENT APPLICATION

(11) **EP 4 738 487 A1**
(43) Date of publication of application: **06.05.2026**
(21) Application number: 25209888.4
(22) Date of filing: 20.10.2025
(51) Int. Cl.: H01M 8/04082, B64D 27/355, B64D 37/30, H01M 8/065, H01M 8/0656, H01M 8/18, B60L 50/70, B64F 1/28, B64F 1/35

(54) **VEHICLE WITH REVERSIBLE FUEL CELL SYSTEM AND METHOD OF OPERATION**

(30) Priority: 18.10.2024 US 202418920524
(71) Applicant: RTX Corporation, Farmington, CT 06032 (US)
(72) Inventor: DARLING, Robert M., South Windsor, 06074 (US); SARAIDARIDIS, James D., South Glastonbury, 06073 (US)
(74) Representative: Dehns

(57) **Abstract**

A method of operation is provided during which hydrogen fuel is produced using a reversible fuel cell system (32) onboard a vehicle while the vehicle is stationary and/or docked. The reversible fuel cell system (32) receives water and input electricity to produce the hydrogen fuel. The hydrogen fuel is stored onboard the vehicle. Output electricity is generated using the reversible fuel cell system (32) while the vehicle is moving. The reversible fuel cell system (32) receives the hydrogen fuel stored onboard the vehicle and air to generate the output electricity.

## Description

### BACKGROUND OF THE DISCLOSURE

### 1. Technical Field

This disclosure relates generally to a vehicle and, more particularly, to a unitized reversible fuel cell system for the vehicle.

### 2. Background Information

Various types of fuel cell systems and methods for operating the fuel cell systems are known in the art. While these known fuel cell systems and methods of operation have various benefits, there is still room in the art for improvement.

### SUMMARY OF THE DISCLOSURE

According to an aspect of the present disclosure, a method of operation is provided during which hydrogen fuel is produced using a reversible fuel cell system onboard a vehicle while the vehicle is stationary and/or docked. The reversible fuel cell system receives water and input electricity to produce the hydrogen fuel. The hydrogen fuel is stored onboard the vehicle. Output electricity is generated using the reversible fuel cell system while the vehicle is moving. The reversible fuel cell system receives the hydrogen fuel stored onboard the vehicle and air to generate the output electricity.

According to another aspect of the present disclosure, a system is provided for a vehicle. This vehicle system includes a water input, an electrical input, a hydrogen storage container, a reversible fuel cell system and an electrical component. The water input is onboard the vehicle. The water input is configured to receive water from a water source offboard the vehicle. The electrical input is onboard the vehicle. The electrical input is configured to receive input electricity from an electricity source offboard the vehicle. The hydrogen storage container is onboard the vehicle. The reversible fuel cell system is onboard the vehicle. The reversible fuel cell system is configured to produce hydrogen fuel during an electrolysis mode using the water received by the water input and the input electricity received by the electrical input. The hydrogen fuel produced by the reversible fuel cell system is stored within the hydrogen storage container. The reversible fuel cell system is configured to generate output electricity during a fuel cell mode is in flight using the hydrogen fuel stored within the hydrogen storage container and air. The electrical component is onboard the vehicle. The electrical component is configured to receive the output electricity generated by the reversible fuel cell system.

According to still another aspect of the present disclosure, a vehicle is provided that includes a vehicle airframe, a reversible fuel cell system, a hydrogen storage container and an electrical component. The reversible fuel cell system is mounted within the vehicle airframe. The reversible fuel cell system is configured to produce hydrogen fuel using water and input electricity during a first mode. The reversible fuel cell system is configured to generate output electricity using the hydrogen fuel and air during a second mode. The hydrogen storage container is mounted within the vehicle airframe. The hydrogen storage container is configured to store the hydrogen fuel produced by the reversible fuel cell system during the first mode. The hydrogen storage container is configured to provide the hydrogen fuel to the reversible fuel cell system during the second mode. A hydrogen storage compound is disposed within the hydrogen storage container. The hydrogen storage compound includes at least one of: a magnesium hydride; a lithium borohydride; a sodium aluminum hydride; an aluminum hydride; an alloy comprising titanium and iron; an alloy comprising titanium and manganese; or an alloy comprising lanthanum and nickel. The electrical component is arranged with the vehicle airframe. The electrical component is configured to receive the output electricity generated by the reversible fuel cell system.

The vehicle may be an aircraft.

The hydrogen fuel may be produced using the reversible fuel cell system onboard the aircraft while the aircraft is on ground. The output electricity may be generated using the reversible fuel cell system while the aircraft is in flight.

The vehicle may be a land vehicle.

The vehicle may be a water vehicle.

The water may be received from a water source offboard of the vehicle during the producing of the hydrogen fuel.

The water may be ultrapure water.

The water may be potable water.

The input electricity may be received from an electricity source offboard of the vehicle during the producing of the hydrogen fuel.

The hydrogen fuel produced by the reversible fuel cell system and the hydrogen fuel received by the reversible fuel cell system may be or otherwise include hydrogen gas.

The storing of the hydrogen fuel may include directing the hydrogen fuel into a storage container onboard the vehicle with a hydrogen absorbing, hydrogen storage compound disposed within the storage container.

The hydrogen absorbing, hydrogen storage compound may be or otherwise include a metal hydride.

The hydrogen absorbing, hydrogen storage compound may be or otherwise include a magnesium hydride.

The hydrogen absorbing, hydrogen storage compound may be or otherwise include a lithium borohydride.

The hydrogen absorbing, hydrogen storage compound may be or otherwise include a sodium aluminum hydride.

The hydrogen absorbing, hydrogen storage compound may be or otherwise include an aluminum hydride.

The hydrogen absorbing, hydrogen storage compound may be or otherwise include an alloy comprising titanium and iron.

The hydrogen absorbing, hydrogen storage compound may be or otherwise include an alloy comprising titanium and manganese.

The hydrogen absorbing, hydrogen storage compound may be or otherwise include an alloy comprising lanthanum and nickel.

The hydrogen absorbing, hydrogen storage compound may include a first hydrogen absorbing, hydrogen storage material and a second hydrogen absorbing, hydrogen storage material that is different than the first hydrogen absorbing, hydrogen storage material.

The hydrogen absorbing, hydrogen storage material may be operable to release hydrogen at a lower temperature than the second hydrogen absorbing, hydrogen storage material.

The first hydrogen absorbing, hydrogen storage material may release the hydrogen fuel during vehicle startup. The second first hydrogen absorbing, hydrogen storage material may release the hydrogen fuel during post vehicle startup operation.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of a system for a vehicle such as an aircraft.
FIG. 2 is a partial schematic illustration of the aircraft system with a unitized-reversible proton-conducting fuel cell during an electrolysis mode of operation.
FIG. 3 is a partial schematic illustration of the aircraft system with the reversible fuel cell during a fuel cell mode of operation.

### DETAILED DESCRIPTION

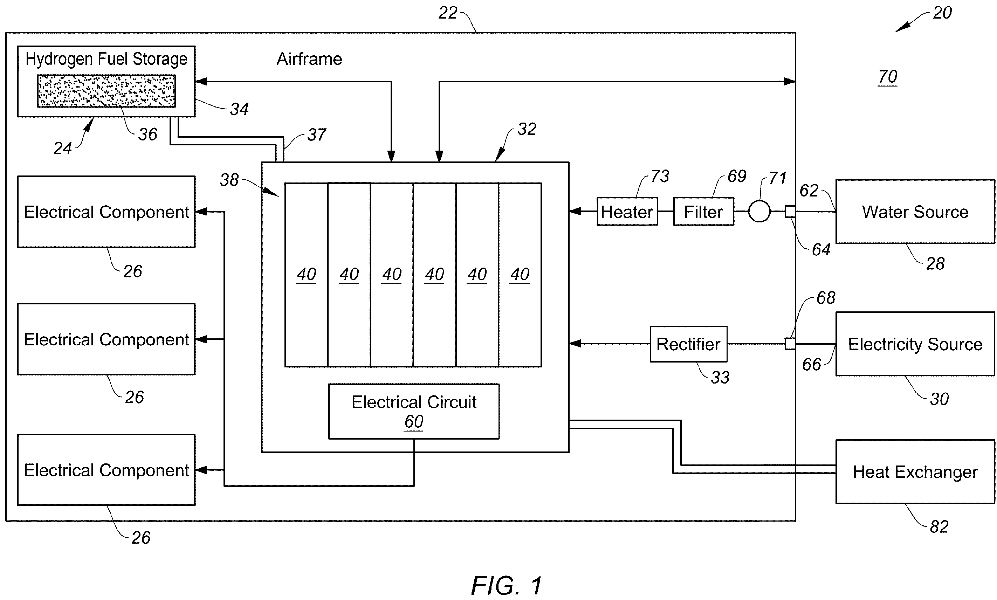

FIG. 1 illustrates a system 20 for an aircraft. This aircraft may be an airplane, a rotorcraft (e.g., a helicopter), a drone (e.g., an unmanned aerial vehicle (UAV)), or any other manned or unmanned aerial vehicle and/or system. The aircraft system 20 may be particularly suited to aircraft (e.g., drones) that are on a cusp between being electrically powered or combustion powered. The aircraft system 20 includes an aircraft airframe 22, a hydrogen fuel storage system 24, one or more aircraft electrical components 26, a water source 28 external to the aircraft, an electricity source 30 external to the aircraft and a reversible fuel cell system 32; e.g., a unitized reversible proton-conducting fuel cell system. The aircraft system 20 may also include a rectifier 33 (e.g., an alternating current (AC) to direct current (DC) converter) between the electricity source 30 and the reversible fuel cell system 32. While this rectifier 33 is shown onboard the aircraft in FIG. 1, it is contemplated the rectifier 33 may alternatively be incorporated with electricity source 30 or otherwise offboard the aircraft.

Components of the aircraft system 20 of FIG. 1 may be categorized as onboard system components and offboard system components. The onboard system components of FIG. 1 include the hydrogen fuel storage system 24, the electrical components 26 and the reversible fuel cell system 32. These onboard system components are disposed onboard the aircraft. Each onboard system component, for example, may be arranged within the aircraft airframe 22 and/or mounted to the aircraft airframe 22. The onboard system components are thereby a part of the aircraft and move with the aircraft during aircraft flight. The offboard system components of FIG. 1 include the water source 28 and the electricity source 30. These offboard system components are disposed offboard and are discrete from the aircraft. Each offboard system component, for example, may be part of a fixture, a system and/or a resource at an airport or other facility or location at which the aircraft may land. The offboard system components are thereby not part of the aircraft and do not move with the aircraft during aircraft flight.

The aircraft airframe 22 is configured to form a body of the aircraft. The aircraft airframe 22, for example, may include an aircraft fuselage, one or more aircraft wings, one or more aircraft stabilizers, one or more rotorcraft booms (e.g., tailboom), and/or one or more other aircraft body components.

The hydrogen fuel storage system 24 is configured to store hydrogen fuel onboard the aircraft before, during and/or after aircraft flight. The hydrogen fuel storage system 24 of FIG. 1, for example, includes a hydrogen fuel storage container 34. This fuel storage container 34 may be disposed within, mounted to and/or integrated as part of the aircraft airframe 22. The hydrogen fuel storage system 24 of FIG. 1 also includes a hydrogen storage compound 36 disposed within an internal volume of the fuel storage container 34. This hydrogen storage compound 36 is a metal compound configured to absorb hydrogen atoms from the hydrogen fuel (e.g., hydrogen (H₂) gas) directed into the hydrogen fuel storage system 24 and its fuel storage container 34 for storage. Examples of the hydrogen storage compound 36 include, but are not limited to:
▪ a metal hydride;
▪ an alloy including titanium (Ti) and iron (Fe) such as TiFe;
▪ an alloy including titanium (Ti) and manganese such as TiMn₂; and
▪ an alloy including lanthanum (La) and nickel (Ni) such as LaNi₅.

Examples of the metal hydride include, but are not limited to:
▪ a magnesium hydride such as MgH₂;
▪ a lithium borohydride such as LiBH₄;
▪ an aluminum hydride such as AlH₃; and
▪ a sodium aluminum hydride such as NaAlH₄.

The hydrogen storage compound 36 may be selected to develop sufficient hydrogen pressure to power the reversible fuel cell system 32 when operated at a temperature below the operating temperature of the reversible fuel cell system 32 so that heat energy (e.g., waste heat energy) from the reversible fuel cell system 32 can drive the release of the hydrogen. The hydrogen storage compound 36 within the fuel storage container 34 may be completely formed from (e.g., only include) a single type of hydrogen storage compound. Alternatively, it is contemplated the hydrogen storage compound 36 within the fuel storage container 34 may include multiple different types of compatible hydrogen storage compounds that have different equilibrium temperature-pressure characteristics. For example, the hydrogen storage compound 36 may include (a) a first bed of material selected to release hydrogen at a relatively low temperature to facilitate start-up and (b) a larger bed of material that requires the heat energy (e.g., waste heat energy) from the reversible fuel cell system 32 to release hydrogen. Generally, high temperature materials store more hydrogen per unit mass. Moreover, while the hydrogen fuel storage system 24 is described above as including a single fuel storage container, it is contemplated the hydrogen fuel storage system 24 may alternatively include multiple of the fuel storage containers 34. The hydrogen storage compound 36 within these fuel storage containers 34 may be the same. Alternatively, the hydrogen storage compound 36 within one of the fuel storage containers 34 may be different than the hydrogen storage compound 36 within another one of the fuel storage containers 34.

A thermal coupling 37 may be provided between the hydrogen fuel storage system 24 and the reversible fuel cell system 32. This thermal coupling 37 may be used to transfer heat energy (e.g., generated during a fuel cell mode of operation) from the reversible fuel cell system 32 to the hydrogen fuel storage system 24 to aid in the release of the stored hydrogen fuel.

The electrical components 26 may include any electrical component onboard the aircraft. Examples of the electrical components 26 include, but are not limited to, an electric motor, an aircraft propulsion system or component, an aircraft flight control system or component, an aircraft sensor system or component, an environmental control system (ECS) or component, a lighting system or component, or the like. Where the electrical components 26 include an electric motor that is part of the aircraft propulsion system, this electric motor may be configured to drive an open or ducted propulsor rotor for providing aircraft thrust and/or lift. The present disclosure, however, is not limited to the foregoing exemplary electrical components.

The water source 28 is configured to output water of sufficient purity for use by the reversible fuel cell system 32 as described below. The water output by the water source 28 may be ultrapure water (UPW) or potable water. Briefly, the term "ultrapure" describes water which has been de-ionized and purified to a stringent specification. Examples of such a specification are provided by organizations such as, but not limited to: American Society for Testing Materials International (ASTMI), Electrical Power Research Institute (EPRI), American Society of Mechanical Engineers (ASME) and International Association for the Properties of Water and Steam (IAPWS). The term "potable" describes drinking quality water. Examples of the water source 28 include, but are not limited to, an inground water storage container, a fixed above ground water storage container, a mobile water storage container, a water purification and/or decontamination system, a water well, a tap for a public or private water system, and other such ultrapure water or potable water supplies.

The electricity source 30 is configured to output alternating-current electricity for use by the reversible fuel cell system 32 as described below. Examples of the electricity source 30 include, but are not limited to, a public or private electrical grid, a portable or permanent electrical generator, a solar power system, a wind power system and a hydropower system.

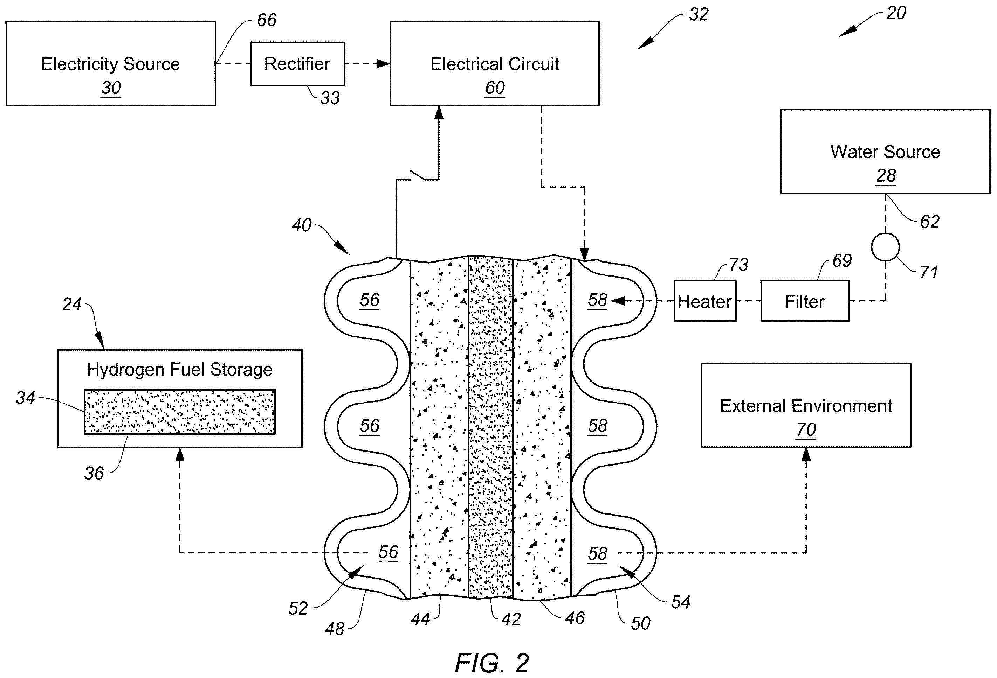

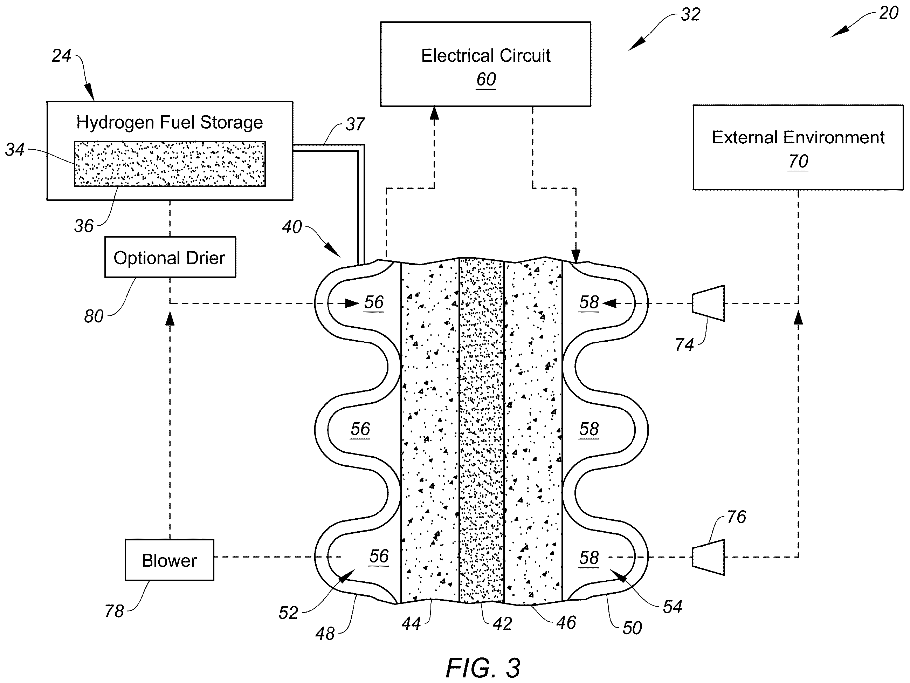

The reversible fuel cell system 32 includes a reversible fuel cell stack 38. This reversible fuel cell stack 38 includes a plurality of proton-conducting reversible fuel cells 40 (URFC) (also referred to as "unitized regenerative fuel cells") arranged side-by-side and electrically coupled together in an array. Referring to FIG. 2, each reversible fuel cell 40 is configured to operate as an electrolyzer for producing the hydrogen fuel (e.g., hydrogen (H₂) gas) during an electrolysis mode of operation. Referring to FIG. 3, each reversible fuel cell 40 is also configured to operate as a fuel cell (e.g., an electrical generator) for generating electrical power during a fuel cell mode of operation.

Each reversible fuel cell 40 of FIGS. 2 and 3 includes a proton-conducting ceramic solid-oxide separator 42, a negative catalyst 44, a positive catalyst 46 and a set of bipolar plates 48 and 50. Briefly, the proton-conducting ceramic solid-oxide separator 42 is electrically insulating (e.g., non-conductive) and is permeable to hydrogen ions (H⁺) and substantially impermeable to water (H₂O). Each reversible fuel cell 40 also includes a negative-side passage 52 (e.g., a fuel passage) and a positive-side passage 54 (e.g., a water or air passage), where each of these passages 52 and 54 extends through the respective reversible fuel cell 40.

The proton-conducting ceramic solid-oxide separator 42 is disposed between and may contact an interior side of the negative catalyst 44 and an interior side of the positive catalyst 46. This proton-conducting ceramic solid-oxide separator 42 thereby separates the negative catalyst 44 from the positive catalyst 46. The negative-side bipolar plate 48 is disposed next to, is electrically coupled with and may contact an exterior side of the negative catalyst 44, where the negative catalyst 44 is between the negative-side bipolar plate 48 and the proton-conducting ceramic solid-oxide separator 42. The negative-side bipolar plate 48 is configured with one or more negative-side channels 56; e.g., fuel channels. These negative-side channels 56 collectively form the negative-side passage 52 between and along the negative-side bipolar plate 48 and the negative catalyst 44. Similarly, the positive-side bipolar plate 50 is disposed next to, is electrically coupled with and may contact an exterior side of the positive catalyst 46, where the positive catalyst 46 is between the positive-side bipolar plate 50 and the proton-conducting ceramic solid-oxide separator 42. The positive-side bipolar plate 50 is configured with one or more positive-side channels 58; e.g., water or air channels. These positive-side channels 58 collectively form the positive-side passage 54 between and along the positive-side bipolar plate 50 and the positive catalyst 46.

Referring to FIG. 3, an electrical circuit 60 for the respective reversible fuel cell 40, or more generally for the reversible fuel cell system 32, is electrically coupled to the negative catalyst 44 through the negative-side bipolar plate 48. This electrical circuit 60 is also electrically coupled to the positive catalyst 46 through the positive-side bipolar plate 50.

Referring to FIG. 1, when the aircraft is on ground, the reversible fuel cell system 32 and each of its reversible fuel cells 40 may be operated in the electrolysis mode to fuel (or refuel) the hydrogen fuel storage system 24 with the hydrogen fuel. An output 62 from the water source 28, for example, may be temporarily fluidly coupled to a water input 64 for the reversible fuel cell system 32 onboard the aircraft. This temporary fluid coupling may be provided through one or more water hoses and/or other fluid coupling devices. Similarly, an output 66 from the electricity source 30 may be temporarily electrically coupled to an electrical input 68 for the reversible fuel cell system 32 onboard the aircraft. This temporary electrical coupling may be provided through one or more electrical cables and/or other electrical coupling devices. With this arrangement, referring to FIG. 2, the water source 28 is fluidly coupled to each reversible fuel cell 40 and its positive-side passage 54. Note, a water filter 69 may be provided inline between the water source 28 and the reversible fuel cell system 32. Similarly, the electricity source 30 is electrically coupled to each reversible fuel cell 40 and its positive catalyst 46 through the electrical circuit 60.

During the electrolysis mode, the positive-side passage 54 and its positive-side channels 58 respectively operate as a water passage and water channels within the respective reversible fuel cell 40. Here, the positive-side passage 54 and its positive-side channels 58 receive a flow of the water from the water source 28. Within the aircraft and its airframe 22 (see FIG. 1), the flow of water may be optionally pumped (or boosted) using a water pump 71 and/or filtered using the water filter 69 prior to entering the reversible fuel cell system 32. Of course, in other embodiments, it is contemplated the pumping and/or the filtering may be omitted and/or performed offboard the aircraft. Simultaneously, the positive catalyst 46 receives electricity (e.g., DC electricity) input into the respective reversible fuel cell 40 from the electricity source 30. This input electricity is directed into the water within the positive-side passage 54 and its positive-side channels 58 to facilitate electrolysis of the water. During the electrolysis process, hydrogen ions (H⁺) migrate across the proton-conducting ceramic solid-oxide separator 42 to the negative catalyst 44 and produce hydrogen (H₂) gas within the negative-side passage 52 and its negative-side channels 56. Note, the hydrogen (H₂) gas may be produced within the reversible fuel cell system 32 and its respective reversible fuel cell 40 at a gas pressure equal to or less than three or four atmospheres (3 or 4 atm) (304 to 405 kPa). This dry hydrogen (H₂) gas (e.g., dry hydrogen (H₂) gas) is subsequently directed to the hydrogen fuel storage system 24 for storage with the hydrogen storage compound 36 within the fuel storage container 34. Simultaneously, during the electrolysis process, oxygen (O₂) gas is produced within the positive-side passage 54 and its positive-side channels 58. This oxygen (O₂) gas along with a quantity of excess (unused) water is then output from the respective reversible fuel cell 40 and its positive-side passage 54. The excess water may then be output from the aircraft into an environment 70 external to the aircraft; e.g., an ambient environment. Alternatively, some or all of the excess water may be rerouted into the reversible fuel cell system 32 to produce additional hydrogen (H₂) gas. In addition, the heat energy generated by the reversible fuel cell system 32 and its respective reversible fuel cell 40 may be provided (e.g., conducted) to a water heater 73 (e.g., an evaporator) to evaporate and/or otherwise pre-heat the water prior to entering the positive-side passage 54 and its positive-side channels 58.

By operating the reversible fuel cell system 32 in the electrolysis mode while the aircraft is on ground, the aircraft may take advantage of utilities commonly available at an aircraft landing area such as an airport. This in turn may significantly extend aircraft flight capabilities. For example, while many airports today may not have hydrogen refueling equipment, many airports typically have an available water source and an available electricity source. In other words, by operating the reversible fuel cell system 32 in the electrolysis mode while the aircraft is on ground at an airport (or other suitable landing area), the aircraft may bring along its own hydrogen refueling equipment.

Referring to FIG. 1, when the aircraft is operating while on ground and/or in flight, the reversible fuel cell system 32 and each of its reversible fuel cells 40 may be operated in the fuel cell mode to output electricity to the electrical components 26. During this fuel cell mode, the output 62 from the water source 28 is fluidly decoupled from the water input 64. The output 66 from the electricity source 30 is electrically decoupled from the electrical input 68. Referring to FIG. 3, each reversible fuel cell 40 and its negative-side passage 52 are fluidly coupled to and downstream of the hydrogen fuel storage system 24. Each reversible fuel cell 40 and its positive-side passage 54 are fluidly coupled to the external environment 70 (or another air or oxygen source). More particularly, an inlet into the positive-side passage 54 of each respective reversible fuel cell 40 is fluidly coupled to the external environment 70 (or another air or oxygen (O₂) gas source). Similarly, an outlet from the positive-side passage 54 of each respective reversible fuel cell 40 is fluidly coupled to the external environment 70.

During the fuel cell mode, the positive-side passage 54 and its positive-side channels 58 respectively operate as an air passage and air channels within the respective reversible fuel cell 40. Here, the positive-side passage 54 and its positive-side channels 58 receive a flow of air pumped in from the external environment 70, such as with an optional compressor or blower 74, depending on altitude. Simultaneously, the negative-side passage 52 and its negative-side channels 56 respectively operate as a fuel passage and fuel channels within the respective reversible fuel cell 40. Here, the negative-side passage 52 and its negative-side channels 56 receive a flow of the hydrogen fuel (e.g., hydrogen (H₂) gas) released from the hydrogen fuel storage system 24. At the negative catalyst 44, the hydrogen fuel is decomposed into electrons and hydrogen ions (H⁺). The electrons are conducted out of the negative catalyst 44, through the negative-side bipolar plate 48, the electrical circuit 60 and the positive-side bipolar plate 50, to the positive catalyst 46. The conduction of the electrons through the electric circuit generates electricity (e.g., DC electricity) output from the respective reversible fuel cell 40 for provision to the electrical components 26 (see FIG. 1). The hydrogen ions, by contrast, migrate across the proton-conducting ceramic solid-oxide separator 42 to the positive catalyst 46. At the positive catalyst 46, oxygen from the air reacts with the hydrogen ions and the electrons to generate water. This water, along with a quantity of excess (unused) vitiated air, is then exhausted from the respective reversible fuel cell 40 and its air passage to be exhausted from the aircraft into the external environment 70. In some embodiments, the vitiated air may first be passed through an optional expander 76 (e.g., a turbine) to recapture energy. A quantity of the vitiated air may also or alternatively be captured for use in fire suppression. Simultaneously, excess hydrogen fuel is exhausted from the respective reversible fuel cell 40 and its negative-side passage 52. The excess hydrogen fuel may be rerouted into the reversible fuel cell system 32 with a recycle blower or ejector 78 to facilitate generation of additional output electricity. Alternatively, the excess hydrogen fuel may be directed back to the hydrogen fuel storage system 24 or exhausted from the aircraft into the external environment 70.

The proton-conducting ceramic solid-oxide separator 42 may be constructed from or otherwise include a solid oxide electrolyte. An example of the solid oxide electrolyte is a ceramic such as BaZr_{0.6}Ce_{0.2}Y_{0.2}O_{3-δ}. Use of such a solid oxide electrolyte for the proton-conducting ceramic solid-oxide separator 42 reduces potential for water cross-over across the proton-conducting ceramic solid-oxide separator 42. It is thereby contemplated the use of a proton-conducting solid-oxide electrolyte for the proton-conducting ceramic solid-oxide separator 42 may reduce or eliminate a need for a drier between the reversible fuel cell system 32 and the hydrogen fuel storage system 24. The present disclosure, however, is not limited to such an exemplary separator. The separator 42, for example, may alternatively be constructed from or otherwise include a proton-conducting polymer electrolyte. An example of the polymer electrolyte is a perfluorosulfonic acid (PFSA) material such as Nafion^{®} material. In such embodiments, a drier 80 may be provided between the reversible fuel cell system 32 and the hydrogen fuel storage system 24. In still another example, the separator 42 may alternatively be constructed from an oxide conducting material rather than proton conducting materials as described above.

In some embodiments, referring to FIG. 1, each of the reversible fuel cells 40 may have a planar fuel cell configuration. In other embodiments, one, some or all of the reversible fuel cells 40 may alternatively (or also) each have a microtubular fuel cell configuration.

The reversible fuel cell system 32 and its respective reversible fuel cells 40 may generate heat energy (e.g., waste heat energy) during the electrolysis mode and/or the fuel cell mode. During the electrolysis mode, at least some of this heat energy may be provided to the water heater 73 to evaporator or otherwise preheat the incoming flow of water. During the fuel cell mode, at least some of the heat energy may be provided to the hydrogen fuel storage 34 through the thermal coupling 37 to aid in the release of the stored hydrogen fuel. Of course, it is contemplated some or all of the heat energy may also or alternatively be transferred into the external environment 70 using a heat exchanger 82 during the electrolysis mode and/or the fuel cell mode.

While the system 20 is described above with reference to an aircraft, the system 20 of the present disclosure is not limited to aircraft applications. It is contemplated, for example, the system 20 may alternatively be configured for other types of vehicles such as, but not limited to, land vehicles, on-water vehicles, underwater vehicles, spacecraft, or the like.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A method of operation, comprising:
producing hydrogen fuel using a reversible fuel cell system (32) onboard a vehicle while the vehicle is stationary and/or docked, wherein the reversible fuel cell system (32) receives water and input electricity to produce the hydrogen fuel;
storing the hydrogen fuel onboard the vehicle; and
generating output electricity using the reversible fuel cell system (32) while the vehicle is moving, wherein the reversible fuel cell system (32) receives the hydrogen fuel stored onboard the vehicle and air to generate the output electricity.

2. The method of claim 1, wherein
the vehicle is an aircraft;
the hydrogen fuel is produced using the reversible fuel cell system (32) onboard the aircraft while the aircraft is on ground; and
the output electricity is generated using the reversible fuel cell system (32) while the aircraft is in flight.

3. The method of claim 1, wherein the vehicle is a water vehicle.

4. The method of any preceding claim, wherein the water is received from a water source (28) offboard of the vehicle during the producing of the hydrogen fuel.

5. The method of any preceding claim, wherein the input electricity is received from an electricity source (30) offboard of the vehicle during the producing of the hydrogen fuel.

6. The method of any preceding claim, wherein the hydrogen fuel produced by the reversible fuel cell system (32) and the hydrogen fuel received by the reversible fuel cell system (32) comprises hydrogen gas.

7. The method of any preceding claim, wherein the storing of the hydrogen fuel comprises directing the hydrogen fuel into a storage container (34) onboard the vehicle with a hydrogen absorbing, hydrogen storage compound (36) disposed within the storage container (34).

8. The method of claim 7, wherein the hydrogen absorbing, hydrogen storage compound (36) comprises a metal hydride, optionally one or more of:
a magnesium hydride;
a lithium borohydride;
a sodium aluminum hydride; and
an aluminum hydride.

9. The method of claim 7 or 8, wherein the hydrogen absorbing, hydrogen storage compound (36) comprises an alloy comprising: titanium and iron; and/or titanium and manganese.

10. The method of any of claims 7 to 9, wherein the hydrogen absorbing, hydrogen storage compound (36) comprises an alloy comprising lanthanum and nickel.

11. The method of any of claims 7 to 10, wherein the hydrogen absorbing, hydrogen storage compound (36) includes:
a first hydrogen absorbing, hydrogen storage material; and
a second hydrogen absorbing, hydrogen storage material that is different than the first hydrogen absorbing, hydrogen storage material.

12. The method of claim 11, wherein the first hydrogen absorbing, hydrogen storage material is operable to release hydrogen at a lower temperature than the second hydrogen absorbing, hydrogen storage material.

13. The method of claim 11 or 12, wherein:
the first hydrogen absorbing, hydrogen storage material releases the hydrogen fuel during vehicle startup; and
the second first hydrogen absorbing, hydrogen storage material releases the hydrogen fuel during post vehicle startup operation.

14. A system for a vehicle, comprising:
a water input (64) onboard the vehicle, the water input (64) configured to receive water from a water source (28) offboard the vehicle;
an electrical input (68) onboard the vehicle, the electrical input (68) configured to receive input electricity from an electricity source (30) offboard the vehicle;
a hydrogen storage container (34) onboard the vehicle;
a reversible fuel cell system (32) onboard the vehicle;
the reversible fuel cell system (32) configured to produce hydrogen fuel during an electrolysis mode using the water received by the water input (64) and the input electricity received by the electrical input (68), wherein the hydrogen fuel produced by the reversible fuel cell system (32) is stored within the hydrogen storage container (34); and
the reversible fuel cell system (32) configured to generate output electricity during a fuel cell mode using the hydrogen fuel stored within the hydrogen storage container (34) and air; and
an electrical component (26) onboard the vehicle, the electrical component (26) configured to receive the output electricity generated by the reversible fuel cell system (32).

15. A vehicle, comprising:
a vehicle airframe (22);
a reversible fuel cell system (32) mounted within the vehicle airframe (22), the reversible fuel cell system (32) configured to produce hydrogen fuel using water and input electricity during a first mode, and the reversible fuel cell system (32) configured to generate output electricity using the hydrogen fuel and air during a second mode;
a hydrogen storage container (34) mounted within the vehicle airframe (22), the hydrogen storage container (34) configured to store the hydrogen fuel produced by the reversible fuel cell system (32) during the first mode, the hydrogen storage container (34) configured to provide the hydrogen fuel to the reversible fuel cell system (32) during the second mode, a hydrogen storage compound (36) disposed within the hydrogen storage container (34), and the hydrogen storage compound (36) comprising at least one of
a magnesium hydride;
a lithium borohydride;
a sodium aluminum hydride;
an aluminum hydride;
an alloy comprising titanium and iron;
an alloy comprising titanium and manganese; or
an alloy comprising lanthanum and nickel; and
an electrical component (26) arranged with the vehicle airframe (22), the electrical component (26) configured to receive the output electricity generated by the reversible fuel cell system (32).
